# EUROPÄISCHE PATENTSCHRIFT

(11) **EP 0 914 685 B1**
(45) Veröffentlichungstag und Bekanntmachung des Hinweises auf die Patenterteilung: **24.07.2002**
(21) Anmeldenummer: 97924921.6
(22) Anmeldetag: 28.05.1997
(51) Int. Cl.: H01M 8/04

(54) **VERFAHREN ZUM BETREIBEN EINER PEM-BRENNSTOFFZELLENANLAGE**
PROCESS FOR OPERATING A PEM-FUEL CELL SYSTEM
PROCEDE PERMETTANT DE FAIRE FONCTIONNER UN SYSTEME DE CELLULE ELECTROCHIMIQUE A ELECTROLYTE MEMBRANAIRE POLYMERE

(30) Priorität: 10.06.1996 DE 19623076
(43) Veröffentlichungstag der Anmeldung: 12.05.1999
(73) Patentinhaber: SIEMENS AKTIENGESELLSCHAFT, 80333 München (DE)
(72) Erfinder: STRASSER, Karl, D-91058 Erlangen (DE); HORNUNG, Regina, D-91052 Erlangen (DE); BETTE, Willi, D-91056 Erlangen (DE)
(86) Internationale Anmeldenummer: DE9701077
(87) Internationale Veröffentlichungsnummer: WO9748143

(56) Entgegenhaltungen:
- EP-A- 0 149 478
- DE-A- 2 836 464
- PATENT ABSTRACTS OF JAPAN vol. 095, no. 003, 28.April 1995 & JP 06 333586 A (SANYO ELECTRIC CO LTD), 2.Dezember 1994, & DATABASE WPI Derwent Publications Ltd., London, GB; AN 95-055311
- PATENT ABSTRACTS OF JAPAN vol. 015, no. 454 (E-1135), 19.November 1991 & JP 03 194863 A (MITSUBISHI ELECTRIC CORP), 26.August 1991,
- PATENT ABSTRACTS OF JAPAN vol. 013, no. 496 (E-843), 9.November 1989 & JP 01 200567 A (HITACHI LTD), 11.August 1989,
- PATENT ABSTRACTS OF JAPAN vol. 096, no. 002, 29.Februar 1996 & JP 07 272738 A (TOYOTA MOTOR CORP), 20.Oktober 1995,
- PATENT ABSTRACTS OF JAPAN vol. 015, no. 254 (E-1083), 27.Juni 1991 & JP 03 081970 A (FUJI ELECTRIC CO LTD), 8.April 1991,
- PATENT ABSTRACTS OF JAPAN vol. 014, no. 182 (E-0916), 12.April 1990 & JP 02 033866 A (MITSUBISHI ELECTRIC CORP), 5.Februar 1990,
- PATENT ABSTRACTS OF JAPAN vol. 096, no. 001, 31.Januar 1996 & JP 07 249424 A (TOSHIBA CORP), 26.September 1995, & DATABASE WPI Derwent Publications Ltd., London, GB; AN 95-384954

## Beschreibung

Die Erfindung bezieht sich auf ein Verfahren zum Betreiben einer PEM-Brennstoffzellenanlage mit wenigstens einem PEM-Brennstoffzellenmodul, das jeweils eine Einrichtung zum Einstellen der Wasserstoffzufuhr und der Sauerstoffzufuhr umfaßt, wobei zum Unterbrechen der Zufuhr in einem ersten Schritt die Sauerstoffzufuhr und in einem zweiten Schritt die Wasserstoffzufuhr unterbrochen wird.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff (H₂) und Sauerstoff (O₂) zu Wasser entsteht elektrischer Strom bei hohem Wirkungsgrad. Wenn als Brenngas reiner Wasserstoff (H₂) eingesetzt wird, geschieht dies ohne Emission von Schadstoffen und Kohlendioxid (CO₂). Auch mit einem technischen Brenngas, beispielsweise Erdgas oder Kohlegas, und mit Luft (die zusätzlich mit Sauerstoff (O₂) angereichert sein kann) anstelle von reinem Sauerstoff (O₂) erzeugt eine Brennstoffzelle deutlich weniger Schadstoffe und weniger Kohlendioxid (CO₂) als andere Energieerzeuger, die mit fossilen Energieträgern arbeiten. Die technische Umsetzung des Prinzips der Brennstoffzelle hat zu unterschiedlichen Lösungen, und zwar mit verschiedenartigen Elektrolyten und mit Betriebstemperaturen zwischen 80 °C und 1000 °C, geführt.

In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen unterscheiden.

Neben den genannten grundsätzlichen Vorteilen bietet eine Brennstoffzelle mit einem festen Elektrolyten aus Kunststoff (Polymere Elektrolytmembran-PEM) weitere positive Eigenschaften wie geringe Betriebstemperatur (< 80 °C), günstiges Überlastverhalten, geringe Spannungsdegradation und hohe Lebensdauer, günstiges Last- und Temperaturzyklusverhalten sowie Fehlen eines flüssigen korrosiven Elektrolyten. Außerdem ist sie auch für einen Betrieb mit Luft aus der Umgebung anstatt mit Sauerstoff (O₂) geeignet. Alle diese Eigenschaften machen die mit Luft betreibbare PEM-Brennstoffzelle zu einem nahezu idealen Stromerzeuger, z.B. für den abgasfreien elektrischen Betrieb eines Kraftfahrzeuges.

Ein PEM-Brennstoffzellenblock (in der Fachliteratur wird ein Brennstoffzellenblock auch "Stack" genannt) setzt sich in der Regel aus einer Vielzahl von planar aufgebauten und aufeinander gestapelten PEM-Brennstoffzellen zusammen. Da der PEM-Brennstoffzellenblock nicht für sich allein betreibbar ist, sind im allgemeinen der PEM-Brennstoffzellenblock, ein Betriebsteil und eine zugeordnete Modulelektronik zu einem PEM-Brennstoffzellenmodul zusammengefaßt. Im Betriebsteil sind die Einrichtungen für die Versorgung mit Betriebsmitteln, beispielsweise Wasserstoff (H₂) und Sauerstoff (O₂) oder Luft, für die Produktwasserabfuhr, für die Verlustwärmeabfuhr, für die Befeuchtung der Betriebsmittel und für die Separation der Gasverunreinigungen, zusammengefaßt.

Werden die Anode und die Kathode der PEM-Brennstoffzelle mit ihren Betriebsmitteln versorgt, so entsteht aus der Summe von Anoden- und Kathodenpotential eine Zellspannung, die in Abhängigkeit vom Belastungsstrom einer bestimmten Charakteristik folgt. Um beim Einschalten einen geordneten Aufbau aller Zellspannungen im PEM-Brennstoffzellenblock zu gewährleisten, muß die Versorgung der Anoden und Kathoden mit ihren Betriebsmitteln durch eine definierte Einschaltphase sichergestellt werden, so daß ein verzögerungsfreier Übergang aus der Einschaltphase in die Phase zum Erzeugen von elektrischer Energie, mit anderen Worten: in die Lastphase, möglich ist. Beim Abschalten wird die Versorgung des PEM-Brennstoffzellenblocks mit den Betriebsmitteln unterbrochen, und die Restkapazität in den Gasräumen der Anoden und Kathoden wird durch Belasten abgebaut, solange die Spannung des PEM-Brennstoffzellenblocks größer als 0 V ist.

Bei einem aus dem Stand der Technik bekannten Verfahren zum Abschalten eines PEM-Brennstoffzellenmoduls wird in einem ersten Schritt ein Wasserstoff-Einlaßventil und in einem zweiten Schritt ein Sauerstoff-Einlaßventil in Abhängigkeit vom Wasserstoff-Partialdruck an einem Anodenteil geschlossen. Dies Verfahren hat eine Erhöhung des Zellinnenwiderstandes der PEM-Brennstoffzellen und eine Vergiftung der Elektrolytmembran zur Folge, was gleichbedeutend mit einem Leistungsverlust ist und zu einem vorzeitigen Ausfall des PEM-Brennstoffzellenmoduls führt.

Aus der DE-A-28 36 464 und der Patent Abstracts of Japan 06333586 sind Verfahren zum Betreiben eines Brennstoffzellenmoduls bekannt, bei denen zum Abschalten des Brennstoffzellenmoduls in einem ersten Schritt die Sauerstoffzufuhr und in einem zweiten Schritt die Wasserstoffzufuhr unterbrochen wird. Der Zeitpunkt zur Unterbrechung der Wasserstoffzufuhr wird aus einem vorgegebenen Spannungswert hergeleitet, unter den die Spannung des Brennstoffzellenblocks nach Abschalten der Sauerstoffzufuhr gesunken ist.

Der Erfindung liegt somit die Aufgabe zugrunde, ein solches vorzeitiges Altern der Brennstoffzelle möglichst zu vermeiden.

Diese Aufgabe wird durch ein Verfahren der eingangs genannten Art gelöst, bei der erfindungsgemäß die Wasserstoffzufuhr bei einem vorgegebenen Sauerstoff-Partialdruck an einem Kathodenteil des PEM-Brennstoffzellenmoduls unterbrochen wird.

Die Erfindung geht davon aus, daß eine Spannung des PEM-Brennstoffzellenblocksvon 0 V nur bedeutet, daß die Summe aller Zellspannungen 0 V ist. Je nachdem, wie die einzelnen PEM-Brennstoffzellen im PEM-Brennstoffzellenblock bezüglich der Strömung der Betriebsmittel geschaltet sind, und je nachdem, welche Belastung in der Abschaltphase eingestellt ist, können völlig unterschiedliche Zellspannungsprofile während der Abschaltung und in der nachfolgenden Stillstandsphase entstehen.

Diese Zellspannungsprofile weisen zunächst auf eine ungleichmäßige Versorgung der Anoden und Kathoden mit Betriebsmitteln während der Abschaltphase hin. Durch nachfolgende Diffusion der Betriebsmittel durch die Elektrolytmembranen bleibt schließlich nur noch dasjenige Betriebsmittel übrig, welches im Überschuß vorhanden ist, da sowohl Anode als auch Kathode nicht selektiv arbeiten.

Ein freies Gasvolumen ist konstruktionsbedingt an den Anoden und Kathoden angenähert gleich groß. Werden beispielsweise Wasserstoff (H₂) und Sauerstoff (O₂) als Betriebsmittel verwendet, so wird bei der elektrochemischen Reaktion in den PEM-Brennstoffzellen doppelt soviel Wasserstoff (H₂) wie Sauerstoff (O₂) verbraucht. Wenn nun die Wasserstoffzufuhr und die Sauerstoffzufuhr zugleich oder aber die Wasserstoffzufuhr vor der Sauerstoffzufuhr unterbrochen wird, ist im PEM-Brennstoffzellenblock Sauerstoff (O₂) im Überschuß vorhanden.

Dieser Restsauerstoff (O₂) im PEM-Brennstoffzellenblock setzt Vorgänge an den Bauelementen der PEM-Brennstoffzellen in Gang, die eine Minderung der Zellspannung und damit auch des Wirkungsgrades zur Folge haben. Unreproduzierbar entstehende Oxidschichten verändern den Zellinnenwiderstand und damit die Stromdichteverteilung. Dabei können auch korrosive Vorgänge auftreten, die die Elektrolytmembran vergiften und dadurch die Lebensdauer des PEM-Brennstoffzellenblocks verkürzen. Sowohl die Erhöhung des Zellinnenwiderstandes als auch die Korrosion an den Bauelementen haben eine Minderung der Zellspannung zur Folge.

Durch das erfindungsgemäße Verfahren wird die Brennstoffzelle in einem Zustand erhalten, der über längere Standzeiten hinweg einen zuverlässigen Betrieb der PEM-Brennstoffzellenanlage gewährleistet. Beim Unterbrechen werden Potentiale an den Elektroden der PEM-Brennstoffzellen vermieden, die korrosive Vorgänge an den Bauelementen der PEM-Brennstoffzellen verursachen könnten. Dadurch wird ein Spannungsverlust infolge eines erhöhten Zellinnenwiderstandes der PEM-Brennstoffzelle und eine Verkürzung der Lebensdauer des PEM-Brennstoffzellenmoduls vermieden. Außerdem wird eine ausreichende Stabilität der Zellspannungen erreicht.

Vorzugsweise wird die Wasserstoffzufuhr bei einem Sauerstoff-Partialdruck von etwa 0,5 bar unterbrochen. In der Praxis hat sich dieser Wert für den Sauerstoff O₂-Partialdruck bewährt.

Insbesondere kann der Sauerstoff (O₂) in Form von verdichteter Luft zugeführt werden. Beim Betrieb mit Luft kann mit Hilfe eines Luftverdichters die Luft aus der Umgebung angesaugt und in das PEM-Brennstoffzellenmodul eingespeist werden. Im ersten Schritt braucht dann lediglich dieser Verdichter abgeschaltet zu werden.

In einer weiteren Ausgestaltung wird der Sauerstoff-Partialdruck indirekt über den statischen Luftdruck gemessen.

Zur weiteren Erläuterung der Erfindung wird auf die Ausführungsbeispiele der Zeichnung verwiesen. Es zeigen:
- FIG 1: eine PEM-Brennstoffzellenanlage in schematischer Darstellung.
- FIG 2: ein Diagramm, in dem die Spannung des PEM-Brenn stoffzellenmoduls gegen seine Betriebszeit aufge tragen ist.

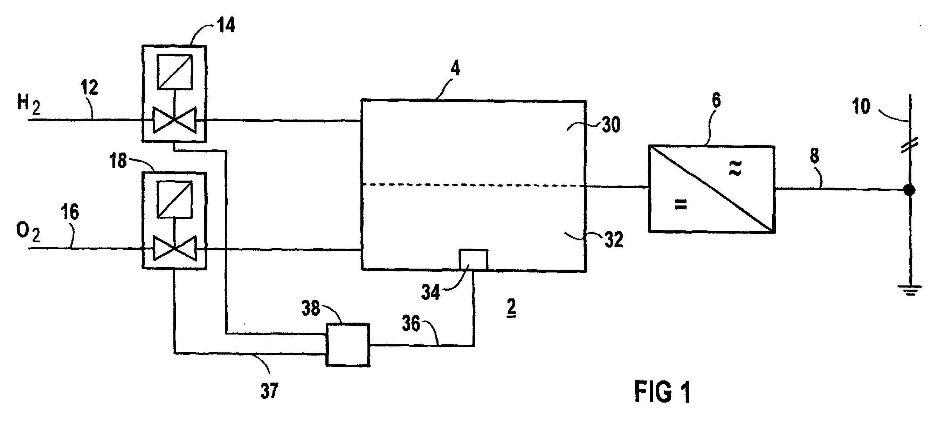

Gemäß FIG 1 umfaßt eine PEM-Brennstoffzellenanlage 2 ein PEM-Brennstoffzellenmodul 4 mit einem Anoden- 30 und einem Kathodenteil 32. Das PEM-Brennstoffzellenmodul 4 setzt sich aus einer Vielzahl von PEM-Brennstoffzellen zusammen, wie sie z.B. aus dem Bericht "Brennstoffzellen für Elektrotraktion", K.Straßer, VDI-Berichte Nr. 912, 1992, Seiten 125 bis 145, bekannt sind. Der beim Normalbetrieb im PEM-Brennstoffzellenmodul 4 erzeugte Gleichstrom wird in einem Wechselrichter 6 in Wechselstrom umgewandelt und über eine Leitung 8 beispielsweise in ein Stromnetz 10 eingespeist.

Über einen Zuweg 12 wird dem Anodenteil 30 des PEM-Brennstoffzellenmoduls 4 Wasserstoff H₂ als Betriebsmittel zugeführt. Im Zuweg 12 ist eine Einrichtung 14 dem PEM-Brennstoffzellenmodul 4 zum Einstellen der Zufuhr vorgeschaltet. Die Einrichtung 14 ist hier als Wasserstoff-Einlaßventil 14 ausgeführt. In einem weiteren nicht dargestellten Ausführungsbeispiel ist die Einrichtung 14 als Verdichter ausgeführt. Über einen Zuweg 16 wird Sauerstoff O₂ als Betriebsmittel in den Kathodenteil 32 des PEM-Brennstoffzellenmoduls 4 für eine elektrochemische Reaktion eingespeist. Im Zuweg 16 ist eine Einrichtung 18 zum Einstellen der Zufuhr an Sauerstoff O₂ dem PEM-Brennstoffzellenmodul 4 vorgeschaltet. Die Einrichtung 18 ist hier als Sauerstoff-Einlaßventil 18 ausgeführt.

Beim Betrieb der PEM-Brennstoffzellenanlage 2 wird zum Unterbrechen der Zufuhr von Betriebsmitteln (hier von Sauerstoff O₂ und Wasserstoff H₂) zum PEM-Brennstoffzellenmodul 4 in einem ersten Schritt das Sauerstoff-Einlaßventil 18 und in einem zweiten Schritt das Wasserstoff-Einlaßventil 14 geschlossen. Nach dem Schließen des Sauerstoff-Einlaßventils 18 strömt weiterhin Wasserstoff H₂ durch den Anodenteil 30 des PEM-Brennstoffzellenmoduls 4. Bei diesem Verfahren wird somit während des Unterbrechens der Zufuhr von Betriebsmitteln der restliche noch im Kathodenteil 32 verbliebene Sauerstoff O₂ zum Erzeugen von elektrischer Energie verbraucht. Durch dieses Verfahren wird sowohl die Lebensdauer der PEM-Brennstoffzellen deutlich verlängert als auch eine ausreichende Stabilität der Zellspannung erreicht.

Vorzugsweise wird im zweiten Schritt das Wasserstoff-Einlaßventil 14 bei einem vorgegebenen Sauerstoff O₂-Partialdruck am Kathodenteil 32 geschlossen. In der Praxis hat sich dabei ein vorgegebener Wert von angenähert 0,5 bar für den Sauerstoff-Partialdruck bewährt.

Dabei braucht der Sauerstoff-Partialdruck nicht direkt gemessen zu werden. So kann unter Umständen aus dem Zusammenbruch der elektrischen Spannung geschlossen werden, daß der Sauerstoff weitgehend abgebaut ist. Insbesondere kann der Sauerstoff-Partialdruck indirekt über den statischen Luftdruck gemessen werden. Für die Messung des statischen Luftdruckes ist ein Drucksensor 34 im Kathodenteil 32 des PEM-Brennstoffzellenmoduls 4 vorgesehen. Der Drucksensor 34 ist über eine elektrische Leitung 36 mit dem Wasserstoff-Einlaßventil 14 verbunden. Eine Steuereinheit 38 zum Schließen und Öffnen des Wasserstoff-Einlaßventils 14 ist in die elektrische Leitung 34 geschaltet. Über eine elektrische Leitung 37 öffnet oder schließt die Steuereinheit 38 das Sauerstoff-Einlaßventil 18. Während des Verfahrens wird die Steuereinheit 38 fortlaufend mit den Werten für den statischen Luftdruck des Drucksensors 34 beaufschlagt. Sinkt der Wert für den Sauerstoff-Partialdruck, der in der Steuereinheit 38 aus dem kontinuierlich gemessenen statischen Luftdruck ermittelt wird, unterhalb des vorgegebenen Wertes für den Sauerstoff-Partialdruck, so wird das Wasserstoff-Einlaßventil 14 von der Steuereinheit 38 geschlossen.

Der Sauerstoff O₂-Partialdruck kann aber auch indirekt über die Spannung des PEM-Brennstoffzellenmoduls 4 gemessen werden.

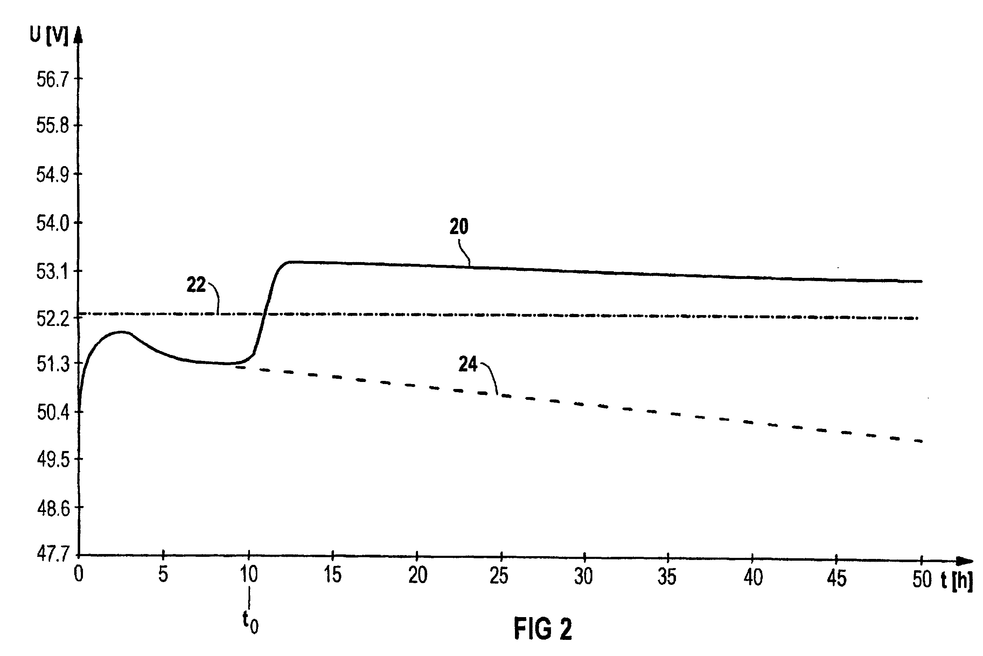

Das Diagramm in FIG 2 zeigt den Verlauf der Spannung U des PEM-Brennstoffzellenmoduls 4 während einer Konditionierung, ausgelegt für eine Leistung zwischen 30 und 50 kW bei einem elektrischen Strom von 650 A, in Abhängigkeit von der Betriebszeit t. Bei der Konditionierung (als vorbereitenden Testlauf für den tatsächlichen Einsatz) wird das PEM-Brennstoffzellenmoduls 4 nach jeweils einer halben Stunde Normalbetrieb ausgeschaltet und wieder eingeschaltet (intermittierender Betrieb). Mit anderen Worten wird der Normalbetrieb durch Unterbrechen der Betriebsmittelzufuhr unterbrochen. Die Spannung U sinkt dabei jeweils beim Ausschalten des PEM-Brennstoffzellenmoduls 4 innerhalb von etwa 15 Sekunden auf 0 V ab.

Die Kurve ist dabei dadurch erhalten, daß nach einer Anlaufphase, in der sich der normale Betriebszustand einstellt, jeweils die Spannungswerte miteinander verbunden werden, die sich während dieses intermittierenden Betriebs jeweils zu Beginn eines Abschaltvorganges ergeben. Die durchgezogene Kurve 20 zeigt die Spannung U des PEM-Brennstoffzellenmoduls 4, der hier 72 Brennstoffzellen enthält jeweils in Volt. Die Strichpunktlinie bei einer Spannung U von etwa 52,2 V ist als Referenzkennlinie 22 eingezeichnet.

In dem Teilbereich der durchgezogenen Kurve 20 für eine Betriebszeit t zwischen 0 und 10 Stunden sind die Meßwerte der Spannung U für das aus dem Stand der Technik bekannte Verfahren aufgetragen. Dabei wird in einem ersten Schritt das Wasserstoff-Einlaßventil 14 und in einem zweiten Schritt das Sauerstoff-Einlaßventil 18 geschlossen. Die aufgetragenen Meßwerte für die Spannung U liegen deutlich unterhalb der Referenzkennlinie 22.

Würde man in der Betriebszeit t zwischen 10 und 50 Stunden (d.h. beginnend bei t₀) weiterhin mit dem aus dem Stand der Technik bekannten Verfahren arbeiten, so ergeben sich Werte für die Spannung U, die der gestrichelten Linie 24 entsprechen. Die gestrichelte Linie 24 zeigt einen deutlichen Abfall in der Betriebszeit t zwischen 10 und 50 Stunden, die einem Absinken der Spannung U von etwa 51,3 auf ungefähr 50 V entspricht.

Der zweite Teil (d.h. beginnend bei t₀) der durchgezogenen Kurve 20 entspricht den Meßwerten der Spannung U nach dem erfindungsgemäßen Verfahren, d.h. daß im ersten Schritt das Sauerstoff-Einlaßventil 18 und im zweiten Schritt das Wasserstoff-Einlaßventil 14 des PEM-Brennstoffzellenmoduls 4 geschlossen wird. Dieser zweite Teil der durchgezogenen Kurve 20 verläuft nahezu konstant bei einer Spannung U von ca. 53 V. Er verläuft deutlich oberhalb der Referenzkennlinie 22, die er nur asymptotisch bzw. nach langen Betriebsdauern erreicht.

Dem Diagramm ist zu entnehmen, daß bei Anwendung des beanspruchten Verfahrens zum Unterbrechen der Zufuhr von Betriebsmitteln für das PEM-Brennstoffzellenmoduls 4 seine Lebensdauer wesentlich länger ist als bei Anwendung des aus dem Stand der Technik bekannten Verfahrens. Nach dem erfindungsgemäßen Verfahren zum Unterbrechen der Zufuhr von Betriebsmitteln wird nicht nur die Lebensdauer der PEM-Brennstoffzellen deutlich verlängert, sondern auch eine ausreichende Stabilität der Spannung U des PEM-Brennstoffzellenmoduls erreicht, was sich in einer angenäherten Konstanz der Spannung U widerspiegelt.

## Patentansprüche

1. Verfahren zum Betreiben einer PEM-Brennstoffzellenanlage (2) mit wenigstens einem PEM-Brennstoffzellenmodul (4), das jeweils eine Einrichtung (14,18) zum Einstellen der Wasserstoffzufuhr und der Sauerstoffzufuhr umfaßt, wobei zum Unterbrechen der Zufuhr in einem ersten Schritt die Sauerstoffzufuhr und in einem zweiten Schritt die Wasserstoffzufuhr unterbrochen wird,
**dadurch gekennzeichnet, daß** die Wasserstoffzufuhr bei einem vorgegebenen Sauerstoff-Partialdruck an einem Kathodenteil (32) des PEM-Brennstoffzellenmoduls (4) unterbrochen wird.

2. Verfahren nach Anspruch 1, **gekennzeichnet durch** einen vorgegebenen Wert von etwa 0,5 bar für den Sauerstoff-Partialdruck.

3. Verfahren nach Anspruch 1 oder 2,
**dadurch gekennzeichnet, daß** der Sauerstoff (O₂) in Form von verdichteter Luft zugeführt wird.

4. Verfahren nach einem der Ansprüche 1 bis 3,
**gekennzeichnet durch** eine indirekte Messung des Sauerstoff-Partialdruckes über den statischen Luftdruck.

## Claims

1. Process for operating a PEM fuel cell installation (2) with at least one PEM fuel cell module (4), which respectively comprises a device (14, 18) for adjusting the hydrogen supply and the oxygen supply, wherein in order to suspend the supply, the oxygen supply is suspended in a first step and the hydrogen supply is suspended in a second step, **characterised in that** the hydrogen supply is suspended when there is a predetermined oxygen partial pressure at a cathode part (32) of the PEM fuel cell module (4).

2. Process according to Claim 1, **characterised by** a predetermined value of about 0.5 bar for the oxygen partial pressure.

3. Process according to Claim 1 or 2, **characterised in that** the oxygen (O₂) is supplied in the form of compressed air.

4. Process according to one of Claims 1 to 3, **characterised by** an indirect measurement of the oxygen partial pressure through the static air pressure.

## Revendications

1. Procédé pour faire fonctionner une installation (2) de pile à combustible PEM comprenant au moins un module (4) de pile à combustible PEM, qui contient respectivement un dispositif (14, 18) de réglage de l'apport d'hydrogène et de l'apport d'oxygène, dans lequel il est prévu, pour l'interruption de l'apport, dans un premier stade d'interrompre l'apport d'oxygène et dans un deuxième stade l'apport d'hydrogène,
**caractérisé en ce que** l'on interrompt l'apport d'hydrogène pour une pression partielle d'oxygène prescrite sur une partie (32) de cathode du module (4) de pile à combustible PEM.

2. Procédé suivant la revendication 1, **caractérisé par** une valeur prescrite d'environ 0,5 bar pour la pression partielle d'oxygène.

3. Procédé suivant la revendication 1 ou 2, **caractérisé en ce que** l'on apporte l'oxygène (O₂) sous la forme d'air comprimé.

4. Procédé suivant l'une des revendications 1 à 3, **caractérisé par** une mesure indirecte de la pression partielle d'oxygène par la pression d'air statique.
